# EUROPÄISCHE PATENTANMELDUNG

(11) **EP 2 329 933 A1**
(43) Veröffentlichungstag der Anmeldung: **08.06.2011**
(21) Anmeldenummer: 10192502.2
(22) Anmeldetag: 25.11.2010
(51) Int. Cl.: B29C 49/68, B29C 49/64, B29B 13/02

(54) **Ofen zum Konditionieren von Vorformlingen**

(30) Priorität: 04.12.2009 DE 102009047536
(71) Anmelder: Krones AG, 93073 Neutraubling (DE)
(72) Erfinder: Winzinger, Frank, 93049, Regensburg (DE); Holzer, Christian, 84069, Schierling (DE); Schönberger, Wolfgang, 93179, Brennberg (DE); Senn, Konrad, 93059, Regensburg (DE); Wutz, Andreas, 93426, Roding (DE)
(74) Vertreter: Grünecker, Kinkeldey, Stockmair & Schwanhäusser Anwaltssozietät

(57) **Zusammenfassung**

Die Erfindung betrifft einen Ofen zum Konditionieren von Vorformlingen mit mehreren im Kreis umlaufenden Heizkammern zum Erwärmen je eines Vorformlings mit Infrarotstrahlung. Es sind ferner Haltevorrichtungen zum Halten der Vorformlinge während der Erwärmung vorgesehen, so dass ein zu konditionierender Abschnitt des Vorformlings im Wesentlichen in der Heizkammer und ein nicht zu konditionierender Abschnitt außerhalb der Heizkammer angeordnet ist. Dadurch kann der zu konditionierende Abschnitt kontrolliert und effektiv erwärmt und der nicht zu konditionierende Abschnitt vor unerwünschter Erwärmung geschützt werden.

## Beschreibung

Die Erfindung betrifft einen Ofen zum Konditionieren von Vorformlingen nach dem Oberbegriff des Anspruchs 1.

Im Blas- bzw. Streck-Blasverfahren herzustellende Behälter werden aus sog. Vorformlingen bzw. Preforms geformt, die vor dem eigentlichen Blasvorgang auf eine gewünschte Prozesstemperatur erwärmt werden müssen. Um die rotationssymmetrischen Vorformlinge, die in der Regel standardisierte Wanddicken aufweisen, beim Blasen in Behälter mit einer bestimmten Form und Wandstärke umformen zu können, sind einzelne Wandbereiche des Vorformlings in einem Ofen, vorzugsweise mit Infrarotstrahlung, dosiert zu erwärmen. Zu diesem Zweck wird üblicherweise ein kontinuierlicher Strom Vorformlinge durch einen Ofen mit entsprechend angepassten Bestrahlungsabschnitten geleitet. Ein Problem derartiger Öfen ist es jedoch, einen möglichst großen Anteil der abgestrahlten Wärmeleistung gezielt in die Vorformlinge einzubringen.

Als Alternative hierzu schlägt die Offenlegungsschrift DE 10 2006 015853 A1 vor, Vorformlinge in einzelnen, die Vorformlinge jeweils umfänglich umschließenden Bestrahlungskammern zu erwärmen, wobei die einzelnen Kammern karussellförmig angeordnet sind. Dabei wird jeder Vorformling sowohl von der als keramischen Infrarotstrahler ausgebildeten Innenwand der Kammer als auch von einem stabförmigen Infrarotstrahler, der in den Vorformling eingeführt wird, erwärmt. Wie einer schematischen Darstellung der DE 10 2006 015853 A1 zu entnehmen ist, wird der Vorformling dabei vollständig in die Bestrahlungskammer eingeführt. Hierbei tritt jedoch das Problem auf, dass ein Mündungsbereich des Vorformlings, der im anschließenden Blasverfahren nicht verformt werden soll, nicht oder nicht in dem selben Maße wie die übrigen Wandabschnitte des Vorformlings erwärmt werden darf. Es besteht somit Bedarf für einen in dieser Hinsicht verbesserten Ofen.

Es ist somit Aufgabe der Erfindung, einen Ofen mit getrennten Bestrahlungskammern bereit zu stellen, der eine dosierte Bestrahlung einzelner Wandbereiche der Vorformlinge erlaubt.

Diese Aufgabe wird mit einem Ofen gelöst, der die im Kennzeichen des Anspruchs 1 definierten Merkmale umfasst. Dadurch, dass der Ofen eine Haltevorrichtung zum Halten der Vorformlinge während der Erwärmung umfasst, um einen zu konditionierenden Abschnitt des Vorformlings im wesentlichen in der Heizkammer und einen nicht zu konditionierenden Abschnitt außerhalb der Heizkammer anzuordnen, kann der zu konditionierende Abschnitt gezielt und mit erhöhter Effektivität erwärmt werden. Gleichzeitig können die Form und Stabilität des nicht zu konditionierenden Abschnitts erhalten werden.

Bei einer vorteilhaften Ausgestaltung weisen die Heizkammern einen ovalen, insbesondere elliptischen Querschnitt oder einen polygonalen, insbesondere rechteckigen Querschnitt auf, und/oder die Haltevorrichtungen sind ausgebildet, um den zu konditionierenden Abschnitt des Vorformlings jeweils exzentrisch bezüglich des Querschnitts der Heizkammer zu halten. Dadurch lässt sich der Vorformling rotationsasymmetrisch bestrahlen und erwärmen und für das Blasen entsprechend asymmetrischer Behälter vorbereiten. Dadurch wird ein "Preferential Heating" auch ohne Rotation des Vorformlings entlang umfänglich unterschiedlich stark strahlender Strahlersegmente ermöglicht. Allerdings ließen sich ovale und polygonale Querschnitte auch mit einer Rotation des Vorformlings bezüglich der Heizkammer kombinieren. Ovale Querschnitte im Sinne der Erfindung schließen die Kombination von geraden umfänglichen Abschnitten und Kreissegmenten ein, wie beispielsweise bei abgerundeten Rechtecken. Vorzugsweise weisen geeignete Querschnitte eine Hauptachse und eine Nebenachse auf, beispielsweise bei elliptischen Querschnitten, oder lange und kurze Seiten, wie beispielsweise bei rechteckigen Querschnitten.

Vorzugsweise ist die Heizkammer und/oder die Haltevorrichtung im Wesentlichen um die Hauptachse des Vorformlings drehbar gelagert, um die Drehlage des Vorformlings bzgl. der Heizkammer beim Erwärmen einzustellen, insbesondere kontinuierlich zu ändern. Dadurch kann der Vorformling umfänglich gleichmäßig erwärmt werden. Alternativ ist es möglich, umfängliche Teilbereiche des Vorformlings zu deren selektiver Erwärmung bzgl. umfänglichen Teilbereichen der Heizkammer gezielt auszurichten.

Eine besonders günstige Ausführungsform umfasst ferner eine zentrale Antriebsvorrichtung zum Drehen der Haltevorrichtungen, wobei die zentrale Antriebsvorrichtung insbesondere mit den Haltevorrichtungen drehmomentschlüssig verbundene und ineinander kämmende Zahnräder umfasst. Die drehmomentschlüssige Verbindung kann Wellen, Getrieberäder und dergleichen umfassen, um ein Antriebsdrehmoment von der Antriebsvorrichtung auf die Haltevorrichtungen zu übertragen. Die zentrale Antriebsvorrichtung läuft vorzugsweise gemeinsam mit den Heizkammern um. Es wäre auch denkbar, dass die zentrale Antriebsvorrichtung mit den Haltevorrichtungen drehmomentschlüssig verbundene jedoch nicht ineinander kämmende Zahnräder oder dergleichen umfasst sowie einen umfänglich um die Zahnräder umlaufenden Riemen, um diese gemeinsam anzutreiben. Die zentrale Antriebsvorrichtung umfasst mindestens einen Motor, der mit der zentralen Antriebsvorrichtung umlaufen kann oder fest stehend sein kann. Der Motor könnte an einem Heizrad radial außen liegend oder innen liegend angebracht sein. Der Begriff "zentral" ist im Sinne von "gemeinsam für mehrere Heizkammern" zu verstehen.

Eine besonders günstige Ausführungsform der Erfindung umfasst ferner: Keil- oder Zahnwellen zur Drehmomentübertragung von der zentralen Antriebsvorrichtung auf die Haltevorrichtungen; und Hubvorrichtungen zum Heben/Senken der Haltevorrichtungen entlang der Keil- oder Zahnwellen. Dadurch können die Vorformlinge entlang der Keil- oder Zahnwelle von einer Übergabestellung in eine Bestrahlungsposition in Richtung der Heizkammern abgesenkt werden. Anders gesagt, wird die Übergabe der Vorformlinge in den Ofen oder aus dem Ofen mit entsprechenden Greifern oder dergleichen durch den Rotationsantrieb des Vorformlings und/oder eines inneren Infrarotstrahlers nicht behindert. Es ist insbesondere möglich, die zentrale Antriebseinheit in einem oberen Bereich des Heizrads anzuordnen, in dem keine Übergabe der Vorformlinge erfolgt, und das Drehmoment zum Antreiben der Haltevorrichtungen durch die Keil- oder Zahnwelle in einen Bereich zu übertragen, in dem eine Übergabe der Vorformlinge erfolgt, und ferner in einen darunter liegenden Bereich, in dem die Bestrahlung der Vorformlinge erfolgt. Zu diesem Zweck ist die Keil- oder Zahnwelle vorzugsweise vertikal fest mit der Haltevorrichtung verbunden und in einer an der zentralen Antriebseinheit vorgesehenen Schiebeführung, beispielsweise einer Nabe, verschiebbar gelagert, um ein Drehmoment zu übertragen.

Bei einer bevorzugten Ausführungsform umfasst die Haltevorrichtung eine Auflageplatte für einen an dem Vorformling ausgebildeten Tragring, wobei an der Haltevorrichtung ein Antriebsmechanismus, insbesondere eine umfängliche Verzahnung und/oder ein dezentraler elektrischer Antrieb, zum Drehen des Vorformlings ausgebildet ist. Dadurch kann der Vorformling an einem nicht zu konditionierenden Bereich gehalten werden, um den zu konditionierenden Bereich definiert zu drehen und den nicht zu konditionierenden Bereich von der Infrarotstrahlung abzuschirmen. Eine solche Anordnung ist konstruktiv besonders einfach zu realisieren.

Vorzugsweise umfasst die Haltevorrichtung eine Aufnahmehülse, die die Heizkammer zumindest teilweise umfänglich umschließt und mit der Auflageplatte durch eine lösbare Kupplung verbunden ist, wobei der Antriebsmechanismus an der Aufnahmehülse vorgesehen ist. Dadurch kann der Antriebsmechanismus an einer Stelle vorgesehen werden, die die Zugänglichkeit der Heizkammer beim Beschicken bzw. bei der Entnahme des Vorformlings nicht oder nur geringfügig einschränkt. Die vorzugsweise axial lösbare Kupplung ermöglicht ein schnelles Austauschen der Auflageplatte und ermöglicht gleichzeitig eine bezüglich der Drehlage des Vorformlings stabile Halterung.

Bei einer bevorzugten Ausführungsform umfasst die Haltevorrichtung ferner eine Anpressvorrichtung, die mit einem an dem Vorformling vorgesehenen Mündungsabschnitt in Eingriff gebracht werden kann, um den Vorformling mit dem Tragring gegen die Auflageplatte zu pressen, wobei der Antriebsmechanismus an der Anpressvorrichtung vorgesehen ist. Dadurch kann der Vorformling gleichzeitig an der Haltevorrichtung fixiert und gedreht werden.

Bei einer bevorzugten Ausführungsform umfasst die Haltevorrichtung einen Haltedorn zum Eingreifen in einen an dem Vorformling vorgesehenen Mündungsbereich, wobei an der Heizkammer ein Antriebsmechanismus, insbesondere eine umfängliche Verzahnung und/oder ein dezentraler elektrischer Antrieb, zur Drehung der Heizkammer ausgebildet ist. Dadurch kann eine besonders stabile Fixierung des Vorformlings bzgl. der Drehachse erzielt werden.

Vorzugsweise fasst die Heizkammer mindestens einen, im Wesentlichen ringförmigen oder ringsegmentförmigen äußeren Infrarotheizstrahler zum Bestrahlen der Außenwand des Vorformlings. Dadurch kann die Wand des Vorformlings besonders gleichmäßig und mit großer Effektivität erwärmt werden.

Vorzugsweise umfasst der Ofen ferner einen axial verstellbaren und im Wesentlichen stabförmigen inneren Infrarotheizstrahler zum Bestrahlen der Innenwand des Vorformlings. Dadurch kann die Innenwand des Vorformlings gezielt und mit großer Effektivität bestrahlt werden, wobei die axiale Verstellbarkeit sowohl das Beschicken der Heizkammer erleichtert, als auch eine gezielte Anpassung der Bestrahlung der Innenwand ermöglicht.

Vorzugsweise weisen die inneren Infrarot-Heizstrahler, wie beispielsweise Heizstäbe, einen ovalen, insbesondere elliptischen Querschnitt oder einen polygonalen, insbesondere rechteckigen Querschnitt auf, und/oder es sind weitere Haltevorrichtungen vorgesehen, um die inneren Infrarot-Heizstrahler jeweils exzentrisch bezüglich der Hauptachse des Vorformlings zu halten. Ebenso könnte der Vorformling exzentrisch bezüglich des inneren Infrarot-Heizstrahlers und der Heizkammer gehalten werden. Dadurch lässt sich der Vorformling rotationsasymmetrisch bestrahlen und erwärmen und für das Blasen entsprechend asymmetrischer Behälter vorbereiten. Somit wird ein "Preferential Heating" auch ohne Rotation des Vorformlings oder des inneren Heizstrahlers ermöglicht. Allerdings ließen sich die exzentrische Positionierung auch mit einer Rotation des Vorformlings oder des inneren Heizstrahlers kombinieren. Ovale Querschnitte im Sinne der Erfindung schließen die Kombination von geraden umfänglichen Abschnitten und Kreissegmenten ein, wie beispielsweise bei abgerundeten Rechtecken. Vorzugsweise weisen geeignete Querschnitte eine Hauptachse und eine Nebenachse auf, beispielsweise bei elliptischen Querschnitten, oder lange und kurze Seiten, wie beispielsweise bei rechteckigen Querschnitten. Die Haltevorrichtung für den inneren Infrarot-Heizstrahler könnte auch in die Haltevorrichtung zum Halten des Vorformlings integriert sein.Bei einer bevorzugten Ausgestaltung sind an dem inneren und/oder äußeren Heizstrahler umfängliche Teilbereiche mit unterschiedlicher Infrarotabstrahlung ausgebildet, insbesondere mit unterschiedlicher Bestrahlungsleistung und/oder mit unterschiedlichem spektralem Abstrahlverhalten, um umfängliche Teilbereiche des Vorformlings unterschiedlich stark zu erwärmen. Dadurch können umfängliche Teilbereiche des Vorformlings gezielt für das Blasen eines asymmetrischen bzw. nicht rotationssymmetrischen Behälters vorbereitet werden.

Bei einer bevorzugten Ausführungsform umfasst die Heizkammer mindestens zwei, insbesondere durch einen Klappmechanismus oder einen Schiebemechanismus verbundene, Kammersegmente, wobei der Ofen ferner eine Betätigungsvorrichtung zum Öffnen und Schließen der Heizkammer durch Auseinander- bzw. Aufeinanderzubewegen der Kammersegmente beim Entladen bzw. Beschicken der Heizkammern umfasst. Dies vereinfacht eine seitliche Beschickung der Heizkammern.

Bei einer besonders günstigen Ausführungsform: sind die Heizkammern umfänglich gleichmäßig an einem um eine Rotationsachse drehbar gelagerten Heizrad angeordnet; ist in der Seitenwand der Heizkammern jeweils eine bzgl. der Rotationsachse radial nach au ßen gerichtete Ausnehmung ausgebildet; und ist an dem Ofen ferner eine umfänglich umschließende Buchse vorgesehen, die die Ausnehmung in einem umfänglichen Teilbereich des Heizrads verschließt, insbesondere zwischen einem Beschickungsbereich und einem Entnahmebereich, in denen jeweils eine Ausnehmung in der Buchse vorgesehen ist, so dass die Heizkammern durch die Ausnehmungen der Heizkammern und der Buchse zur Beschickung mit einem Vorformling bzw. zu dessen Entnahme zugänglich sind. Dadurch können die Heizkammern seitlich beschickt bzw. entladen werden, wobei zusätzliche Mechanismen zum Öffnen und Schließen der Heizkammern, wie beispielsweise Klappen, entbehrlich sind.

Bei einer weiteren günstigen Ausführungsform: sind die Heizkammern umfänglich gleichmäßig an einem um eine Rotationsachse drehbar gelagerten Heizrad angeordnet; ist in der Seitenwand der Heizkammern jeweils eine bezüglich der Rotationsachse radial nach innen gerichtete Ausnehmung ausgebildet ist; und ist an dem Ofen ferner eine zentrale Buchse vorgesehen, die die Ausnehmung in einem umfänglichen Teilbereich des Heizrads verschließt, insbesondere zwischen einem Beschickungsbereich und einem Entnahmebereich, in denen jeweils eine Ausnehmung in der Buchse vorgesehen ist, so dass die Heizkammern durch die Ausnehmungen der Heizkammern und der Buchse zur Beschickung mit einem Vorformling bzw. zu dessen Entnahme zugänglich sind. Dadurch können die Heizkammern seitlich beschickt bzw. entladen werden, wobei zusätzliche Mechanismen zum Öffnen und Schließen der Heizkammern, wie beispielsweise Klappen, entbehrlich sind.

Bei einer besonders günstigen Ausgestaltung der Erfindung ist eine erste Heizstufe in Form einer ersten Gruppe Heizkammern vorgesehen, die in einem ersten Kreis umlaufen und eine zweite Heizstufe in Form einer zweiten Gruppe Heizkammern, die in einem zweiten Kreis umlaufen, wobei die Haltevorrichtungen eingerichtet sind, um die Vorformlinge beim Erwärmen in beiden Heizstufen zu halten. Dadurch können die Vorformlinge von der Haltevorrichtung nacheinander in unterschiedlichen Heizstufen gehalten werden, bzw. in deren Heizkammern positioniert werden, um durch Kombination getrennt einstellbarer bzw. optimierbarer Heizstufen Bestrahlungsbedingungen bereitstellen zu können, die für eine bestimmte axiale und/oder umfängliche Wärmeprofilierung der Vorformlinge besonders günstig sind.

Vorzugsweise sind die Heizkammern und/oder die Haltevorrichtungen dabei eingerichtet, um die Drehlage des Vorformlings bzgl. der Heizkammer beim Erwärmen in der ersten Heizstufe kontinuierlich zu ändern und beim Erwärmen in der zweiten Heizstufe gerichtet einzustellen, oder umgekehrt, so dass der Vorformling in der ersten Stufe bzgl. seiner Hauptachse im wesentlichen umfänglich gleichmäßig und in der zweiten Stufe in einer ersten zur Hauptachse senkrechten Richtung stärker als in einer zweiten senkrechten Richtung erwärmt wird, bzw. umgekehrt. Dadurch ist es möglich, die Vorformlinge in der ersten Stufe gleichmäßig vorzuwärmen und in der zweiten Stufe gezielt für das Blasen einer umfänglich asymmetrischen Behälterform vorzubereiten.

Vorzugsweise ist die Infrarotstrahlung in den Heizkammern der ersten Heizstufe im wesentlichen derart verteilt, dass sich axiale Teilbereiche der Vorformlinge unterschiedlich stark erwärmen und in den Heizkammern der zweiten Stufe im wesentlichen derart, dass sich umfängliche Teilbereiche der Vorformlinge unterschiedlich stark erwärmen. Dadurch lässt sich eine axiale bzw. umfängliche Wärmeprofilierung der Vorformlinge in getrennten Heizstufen durchführen und somit besonders genau einstellen.

Eine besonders günstige Ausführungsform umfasst ferner eine erste und eine zweite Transportvorrichtung zum umlaufenden Transport der Heizkammern der ersten bzw. der zweiten Gruppe, wobei die Transportbahnen der Transportvorrichtungen jeweils einen Abschnitt aufweisen, der ein Segment einer gemeinsamen Kreisbahn ausbildet, wobei die Haltevorrichtungen auf dem Heizrad so angeordnet sind, dass sie in einem umfänglichen Teilabschnitt des Heizrads im wesentlichen entlang der gemeinsamen Kreisbahn umlaufen. Dadurch kann der Ofen als Rundläufer ausgelegt werden, bei dem die Haltevorrichtung auf einer im wesentlichen kreisförmigen Bahn mit konstantem radialem Abstand von der Drehachse des Ofens umlaufen.

Bevorzugte Ausführungsformen sind in der Zeichnung dargestellt. Es zeigen:
- Fig. 1: eine schematische Draufsicht auf einen Ofen gemäß einer ersten Ausführungsform der Erfindung;
- Fig. 2: eine schematische Draufsicht auf einen Ofen gemäß einer zweiten Ausführungsform der Erfindung;
- Fig. 3: einen schematischen Längsschnitt durch eine Heizkammer der zweiten Ausführungsform mit einer drehbaren Auflageplatte für einen Vorformling;
- Fig. 4: einen schematischen Längsschnitt durch eine Heizkammer der ersten Ausführungsform, mit einer drehbaren und schnell wechselbaren Auflageplatte für einen Vorformling;
- Fig. 5: eine schematische Teilansicht einer dritten Ausführungsform des erfindungsgemäßen Ofens mit einer drehbaren Heizkammer;
- Fig. 6: einen schematischen Querschnitt durch eine erfindungsgemäße Bestrahlungsanordnung;
- Fig. 7: einen schematischen Querschnitt durch eine alternative Variante einer erfindungsgemäßen Bestrahlungsanordnung;
- Fig. 8: einen schematischen Querschnitt einer erfindungsgemäßen Heizkammer mit einer aufklappbaren Seitenwand;
- Fig. 9: eine vierte Ausführungsform des erfindungsgemäßen Ofens mit einer das Heizrad umfänglich umschließenden Buchse;
- Fig. 10: eine schematische Draufsicht auf eine fünfte Ausführungsform des erfindungsgemäßen Ofens mit zwei hintereinander geschalteten Heizstufen;
- Fig. 11: einen schematischen Querschnitt durch eine rotationsasymmetrische Heizkammer und einen rotationsasymmetrischen Heizstab;
- Fig. 12: einen schematischen Querschnitt durch eine Heizkammer mit einem rotationsasymmetrisch positionierten Vorformling;

- Fig. 13: eine Draufsicht auf eine zentrale Antriebsvorrichtung für erfindungsgemäße Haltevorrichtungen;
- Fig. 14: Seitenansichten der zentralen Antriebsvorrichtung mit einer Haltevorrichtung für einen Vorformling in einer Bestrahlungsstellung und einer Übergabestellung; und
- Fig. 15: eine schematische Draufsicht auf eine zentrale Antriebsvorrichtung mit einem umfänglich umlaufenden Antriebsriemen..

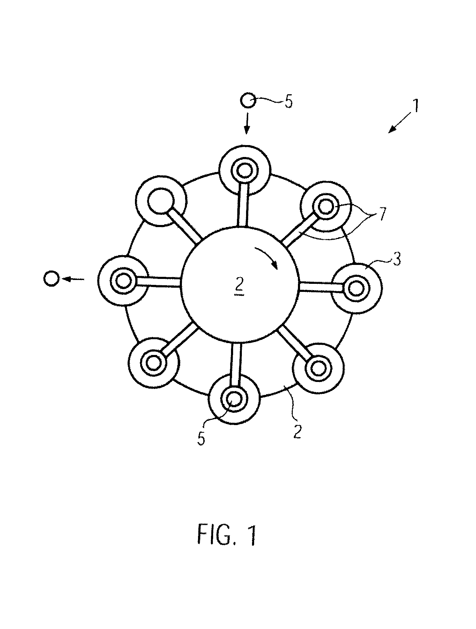

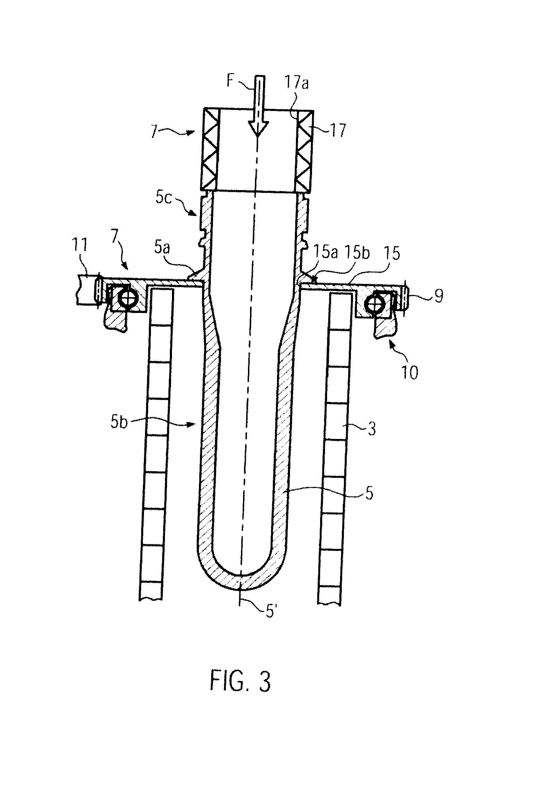

Wie Fig. 1 erkennen lässt, umfasst die erste Ausführungsform des erfindungsgemäßen Ofens 1 ein Heizrad 2 mit umfänglich gleichmäßig an diesem verteilten Heizkammern 3 zum Erwärmen je eines Vorformlings 5 und Haltevorrichtungen 7 zum Halten der Vorformlinge 5. Die Haltevorrichtungen 7 sind so ausgebildet, dass sie die Vorformlinge 5 von einem (nicht dargestellten) herkömmlichen Einlaufstern, wie z.B. einem Teilungsverzugsstern, übernehmen bzw. an einen (nicht dargstellten) herkömmlichen Auslaufstern übergeben können. Dazu können sie u. a. bewegliche Greifer, Schwenk- und/oder Hubmechanismen umfassen. Die Haltevorrichtung 7 kann in Richtung der in Fig. 3 dargestellten Hauptachse 5' des Vorformlings 5 mit einer nicht näher dargestellten Hubvorrichtung 13 bewegt werden, um den Vorformling 5 in die Heizkammer 3 einzuführen bzw. aus der Heizkammer 3 zu entnehmen.

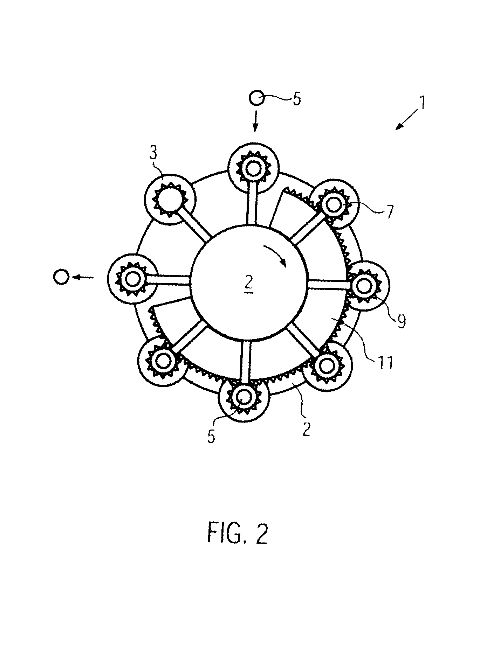

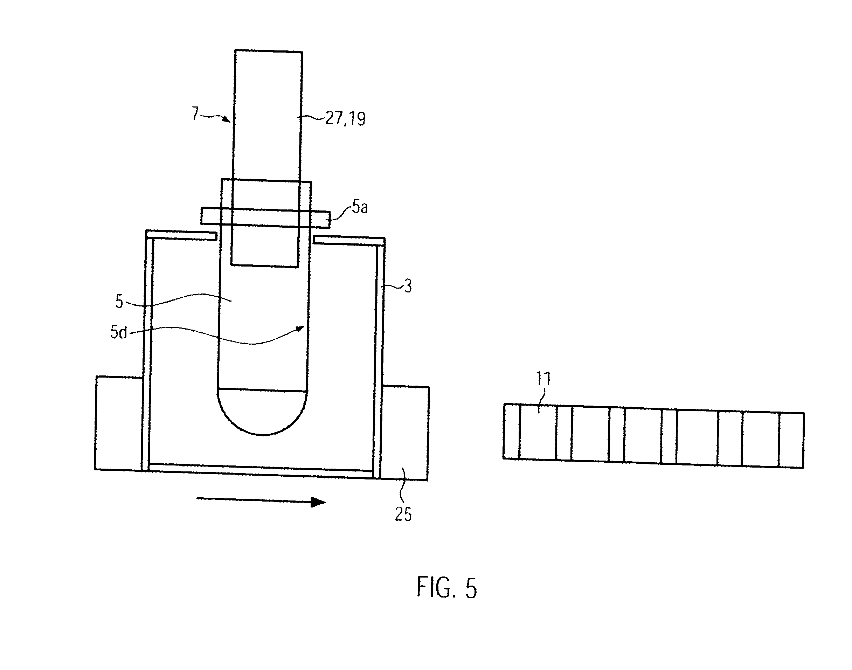

Die in Fig. 2 dargestellte zweite Ausführungsform des Ofens 1 unterscheidet sich von der ersten Ausführungsform dadurch, dass die Haltevorrichtungen 7 zusätzlich je einen Antriebsmechanismus 9, beispielsweise in Form einer umfänglichen Verzahnung, und eine drehbare Lagerung 10 umfassen, wie in Fig. 3 dargestellt, um den Vorformling 5 um seine Hauptachse 5' zu drehen, insbesondere um seine Drehlage bezüglich der Heizkammer 3 einzustellen bzw. zu verändern. Entsprechend ist an dem Heizrad 2 eine Antriebsvorrichtung 11 vorgesehen, im Beispiel der Fig. 2 in Form einer feststehenden Zahnscheibe, die mit dem Antriebsmechanismus 9 der Haltevorrichtungen 7 in einem umfänglichen Teilabschnitt des Heizrads 2 in Eingriff ist, um die Haltevorrichtungen 7 bzw. die Vorformlinge 5 zu drehen. Im gezeigten Beispiel sind die Heizkammern 3 nicht drehbar gelagert. Die Drehlage der Vorformlinge 5 bezüglich der Heizkammern 3 könnte aber genauso gut in Anlehnung an Fig. 2 durch Drehung der Heizkammern 3 bewirkt werden, wie unter Bezugnahme auf Fig. 5 noch ausführlich erläutert. Die Anzahl der pro Heizrad 2 vorgesehen Heizkammern 3 kann in der Praxis deutlich von der Darstellung in Fig. 1 und 2 abweichen.

Wie in Fig. 3 dargestellt, umfasst die erfindungsgemäße Haltevorrichtung 7 eine Auflageplatte 15 mit einer zentralen Ausnehmung 15a, durch die der Vorformling 5 in die Heizkammer 3 eingeführt werden kann. Die Ausnehmung 15a ist so dimensioniert, dass ein an dem Vorformling 5 ausgebildeter Tragring 5a auf einen an die Ausnehmung 15a angrenzenden Auflagebereich 15b der Auflageplatte 15 aufgesetzt werden kann, so dass diese den Vorformling 5 trägt bzw. in axialer Richtung zur Heizkammer 3 hin als Anschlag für den Tragring 5a wirkt und den Vorformling 5 bezüglich der Heizkammer 3 zentriert.

Der Auflagebereich 15b ist in axialer Richtung vorzugsweise nicht dicker ist als 1 mm, so dass ein möglichst großer Anteil des zu konditionierenden Abschnitts 5b des Vorformlings 5 innerhalb der Heizkammer 3 angeordnet werden kann. Gleichzeitig ist der nicht zu konditionierende Abschnitt 5c des Vorformlings, im Wesentlichen der Mündungsbereich des Vorformlings 5 bzw. des zu blasenden Behälters mit dem Tragring 5a, außerhalb der Heizkammer 3 angeordnet, wobei die Auflageplatte 15 auch als optische und thermische Abschirmung gegen die Heizkammer 3 wirkt. Somit kann durch Eingriff des Tragrings 5a mit der Auflagefläche 15b eine koaxiale Position des Vorformlings 5 in der Heizkammer 3 reproduzierbar und auf einfache Weise eingestellt werden.

Die Haltevorrichtung 7 umfasst ferner eine Anpresshülse 17, um den Tragring 5a gegen den Auflagebereich 15b zu drücken. Die Anpresshülse 17 überträgt eine definierte Anpresskraft F, beispielsweise mit Hilfe einer (nicht dargestellten) Anpressfeder, auf den Mündungsbereich 5c des Vorformlings 5 und ist mit einer zentralen Ausnehmung 17a versehen, durch die ein (in Fig. 2 der Einfachheit halber nicht dargestellter) stabförmiger Heizstrahler 19 in den Vorformling 5 eingeführt werden kann.

Der bei der zweiten Ausführungsform vorgesehene Antriebsmechanismus 9 ist an der Auflageplatte 15 beispielsweise als umfängliche Verzahnung ausgebildet. Ferner ist an der Haltevorrichtung 7 eine Lagerung 10 für die Auflageplatte 15 vorgesehen, um eine Drehung der Auflageplatte 15 im Wesentlichen um die Längsachse 5' des Vorformlings 5 zu ermöglichen. Angedeutet ist ferner die Antriebsvorrichtung 11, die, wie in Fig. 1 angedeutet, an dem Heizrad 2 feststehend vorgesehen ist. Es wäre jedoch auch möglich, die Antriebsvorrichtung 11 dezentral auszulegen, beispielsweise in Form einzelner, den Haltevorrichtungen 7 bzw. den Heizkammern 3 zugeordneter Antriebsmotoren. Ebenso denkbar wären alternative Antriebsformen, wie z.B. Riemenantriebe.

Bei der ersten Ausführungsform sind die in Fig. 3 gezeigten Antriebselemente 9, 11 nicht erforderlich, die Lagerung 10 ist vorzugsweise feststehend.

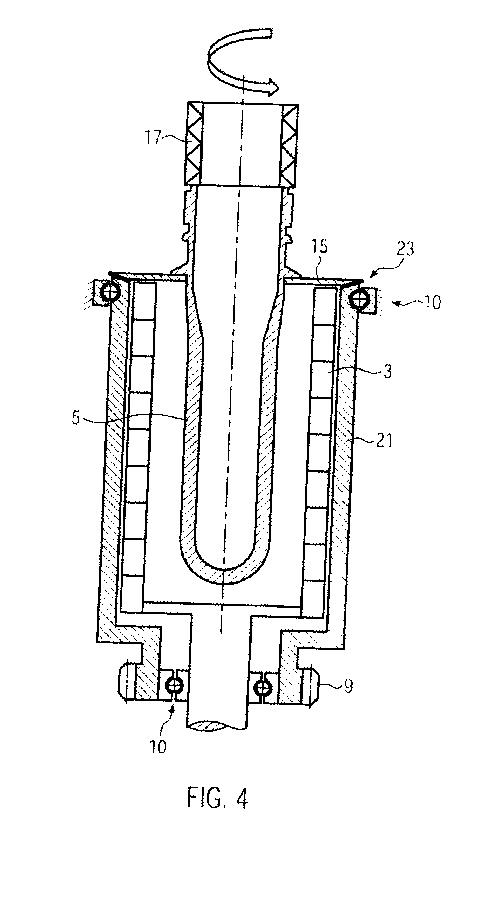

Die Auflageplatte 15 kann als speziell an bestimmte Vorformlinge 5 angepasstes Garniturenteil ausgelegt sein und mit der Lagerung 10 über eine schnellwechselbare Kupplung verbunden sein, wie in Fig. 4 angedeutet, beispielsweise über eine Magnetkupplung. Denkbar wäre auch eine bajonettartige Kupplung.

Es wäre auch möglich, den Antriebsmechanismus 9 nicht an der Auflageplatte 15 sondern an der Anpresshülse 17 vorzusehen (nicht dargestellt), beispielsweise als umfängliche Verzahnung, die mit einer entsprechend angeordneten Antriebsvorrichtung 11 nach dem Beladen der Heizkammer 3 in Eingriff gebracht werden könnte. Auch ein Direktantrieb der Hülse 17 durch einen Motor mit einer Hohlwelle wäre denkbar.

Eine Rotation des Vorformlings 5 oder der Heizkammer 3 bzw. des Strahlers 19 begünstigt eine in Umfangsrichtung des Vorformlings 5 gleichmäßige Erwärmung. Hierzu kann entweder die Anpresshülse 17 oder die Auflageplatte 15 oder die Heizkammer 3 gedreht werden. Denkbar wäre auch eine kombinierte Drehung mehrerer mit dem Vorformling 5 in Kontakt tretender Komponenten. Die kombinierte Drehung könnte dann beispielsweise gegenläufig sein. Die nicht angetrieben Teile sind bevorzugt drehbar gelagert bzw. fest bezüglich des Vorformlings 5 gelagert.

Fig. 4 zeigt eine Variante der zweiten Ausführungsform, bei der die Haltevorrichtung 7 zusätzlich eine mit dem Antriebsmechanismus 9 verbundene Aufnahmebuchse 21 zur Aufnahme der Heizkammer 3 umfasst, wobei die Auflageplatte 15 durch eine axial lösbare Kupplung 23 mit der Aufnahmebuchse 21 verbunden ist, beispielsweise durch eine Magnetkupplung. In diesem Fall ist der Antriebsmechanismus 9 vorzugsweise an dem der Auflageplatte 15 entgegen gesetzten Ende der Aufnahmebuchse 21 angeordnet, in Figur 4 an deren unterem Ende, während die Auflageplatte 15 die Aufnahmebuchse 21 nach oben hin abschließt. Somit kann die Antriebsvorrichtung 11 für den Antriebsmechanismus 9 in einem Bereich der Haltevorrichtung 7 angeordnet werden, der zum Be- und Entladen der Heizkammer 3 nicht zugänglich sein muss.

Bei dieser Variante greift die Lagerung 10 vorzugsweise direkt an der Aufnahmebuchse 21 an, so dass die Auflageplatte 15 schnell wechselbar als Garniturenteil ausgeführt werden kann. Dies kann insbesondere dann von Vorteil sein, wenn verschiedene Auflageplatten 15 für unterschiedlich dimensionierte Vorformlinge 5 vorgesehen sind. Die Aufnahmebuchse 21 kann zusätzlich so ausgeführt werden, dass sie die Heizkammer 3 nach außen hin thermisch isoliert.

Mit der in den Figuren 3 und 4 gezeigten Lagerung des Vorformlings 5 kann ein Taumeln des Vorformlings 5 verhindert werden, das ansonsten im ungünstigsten Fall zu einem Ablösen des Vorformlings 5 von der Haltevorrichtung 7 führen könnte. Außerdem ist nur ein vergleichsweise geringer Abstand zwischen dem stabförmigen Heizstrahler 19 und der Innenwand 5d des Vorformlings 5 nötig, so dass eine besonders genaue Temperaturprofilierung des Vorformlings 5 möglich ist.

Fig. 5 zeigt eine schematische Teilansicht einer alternative Ausführungsform des erfindungsgemäßen Ofens 1, bei der ein Antriebsmechanismus 25, beispielsweise als umlaufende Verzahnung, an der Heizkammer 3 vorgesehen ist, um eine Drehlage des Vorformlings 5 bezüglich der Heizkammer 3 einzustellen bzw. zu verändern. Auch in diesem Fall könnte eine Antriebsvorrichtung 11 als feststehendes, zentrales Zahnrad, als Riemenantrieb oder als dezentraler Antrieb in Form einzelner Motoren ausgebildet sein. Die Lagerung der Heizkammer 3 ist in Fig. 5 der Einfachheit halber nicht dargestellt. Jedoch ist die Heizkammer vorzugsweise so gelagert, dass sie beim Umlaufen des Heizrads 2 mit der Antriebsvorrichtung 11 in Eingriff gebracht werden kann (in Fig. 5 näherungsweise durch einen Pfeil angedeutet).

Zum Halten des Vorformlings 5 umfasst die Haltevorrichtung 7 im Unterschied zu den Varianten der Fig. 3 und 4 an Stelle der Aufnahmeplatte 15 einen Haltedorn 27, der beispielsweise an dem stabförmigen Heizelement 19 vorgesehen sein oder von diesem gebildet werden kann, und der mit der Innenwand 5d des Vorformlings 5 in Eingriff gebracht werden kann. Der Haltedorn 27 kann einen (nicht dargestellten) axialen Anschlagmechanismus umfassen, um den Vorformling 5 in einer definierten axialen Position zu halten. Vorzugsweise ist der Außendurchmesser des Haltedorns 27 so an den Innendurchmesser des Vorformlings 5 angepasst, dass der Vorformling 5 in einer axial zentrierten Lage und gegen ein Verkippen gesichert auf dem Haltedorn 27 sitzt. Ein Taumeln des Vorformlings 5 kann auf diese Weise reduziert werden, das im ungünstigsten Fall zu einem Ablösen des Vorformlings 5 von der Haltevorrichtung 7 führen könnte. Außerdem ist nur ein vergleichsweise geringer Abstand zwischen dem stabförmigen Heizstrahler 19 und der Innenwand 5d des Vorformlings 5 nötig, so dass eine besonders genaue Temperaturprofilierung des Vorformlings 5 möglich ist.

Es ist generell möglich, die beschriebenen Varianten auch mit dezentralen elektrischen Antrieben für jede Heizkammer 3, jeden Heizstab 19 und/oder jede Aufnahmeplatte 15 zu realisieren, beispielsweise mit Servomotoren oder Schrittmotoren.

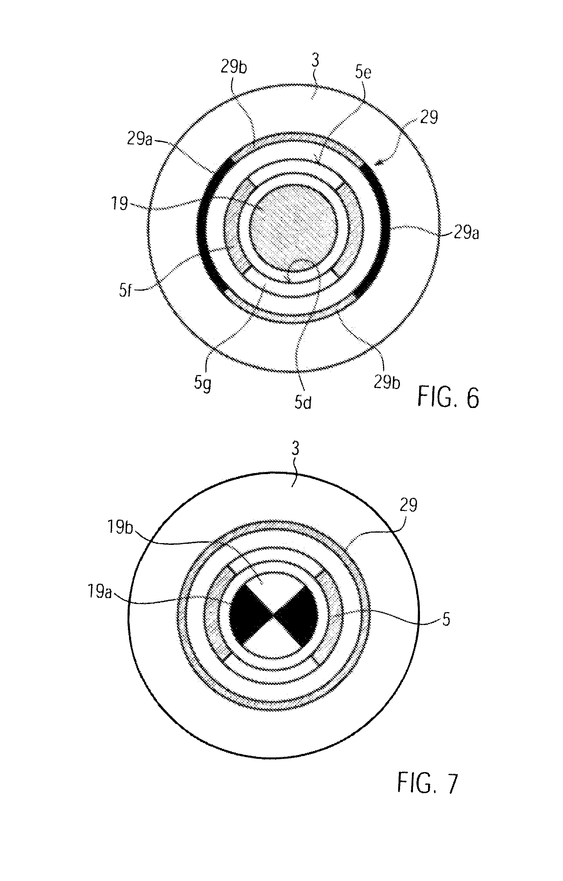

Wie Fig. 6 verdeutlicht, ist in der Heizkammer 3 mindestens ein ringförmiger oder ringsegmentförmiger Heizstrahler 29 zur Abgabe von Infrarotstrahlung in Richtung der Außenwand 5e des Vorformlings 5 vorgesehen. Der Heizstrahler 29 kann beispielsweise umfänglich unterschiedlich stark erwärmte Segmente 29a und 29b umfassen. Ebenso können an dem Heizstrahler 29 in axialer Richtung unterschiedlich stark heizende Segmente 29c und 29d ausgebildet sein. Die Anzahl der umfänglichen bzw. axialen Segmente 29a bis 29d kann je nach gewünschter thermischer Profilierung des Vorformlings 5 in umfänglicher bzw. radialer Richtung angepasst werden. Beispielsweise können, wie in Fig. 6 angedeutet, jeweils einander gegenüberliegende Segmente 29a mit vergleichsweise hoher Heizleistung im Wechsel mit sich ebenfalls gegenüberliegenden Segmenten 29b mit vergleichsweise niedriger Heizleistung angeordnet sein. Dies führt insbesondere bei einer konstanten Drehlage des Vorformlings 5 in der Heizkammer 3 dazu, dass umfängliche Teilbereiche 5f, 5g des Vorformlings 5 unterschiedlich stark erwärmt werden, so dass bei einem anschließenden Blasvorgang umfänglich asymmetrische Behälterformen mit im Wesentlichen konstanter Wandstärke erzeugt werden können.

Eine derartige Konfiguration ist somit zum sogenannten "Preferential Heating" geeignet, um zumindest in einer zur Hauptachse 5' des Vorformlings 5 senkrechten Richtung eine andere Wandtemperatur des Vorformlings 5 zu erzeugen als in einer zweiten zur Hauptachse 5' ebenfalls senkrechten Richtung. Die erste und zweite zur Hauptachse senkrechte Richtung können in vorteilhafter Weise orthogonal zueinander sein.

Die Strahler 29 bzw. die Segmente 29a bis 29d könnten beispielsweise als aktiv mit einer Heizwendel beheizte oder passive Funktionskeramik ausgeführt sein, die Wärmestrahlung mit einem ausgewählten Spektralbereich abstrahlt, oder auch als Heizwendel, beispielsweise als Omegastrahler oder Teilbereich eines Omegastrahlers. Im Beispiel der Fig. 6 ist ein segmentierter ringförmiger Strahler 29 mit einem zentralen Heizstab 19 kombiniert. Dieser bestrahlt die Innenwand 5d des Vorformlings 5 mit einer umfänglich im Wesentlichen gleichmäßig verteilten Heizleistung.

Alternativ dazu zeigt die Fig. 7 einen Heizstab 19, bei dem umfängliche Teilbereiche 19a und 19b mit unterschiedlicher Heizleistung vorgesehen sind. Dadurch kann bei einer konstanten Drehlage des Heizstabs 19 bezüglich des Vorformlings 5 eine umfänglich unterschiedlich starke Erwärmung des Vorformlings 5 bewirkt werden. In Fig. 7 ist der ringförmige Heizstrahler 29 nicht segmentiert. Es wäre jedoch auch möglich, den segmentierten Heizstab 19 mit der segmentierten Ausführung des Ringstrahlers 29, beispielsweise wie in Fig. 6 gezeigt, zu kombinieren. Hierbei ist es vorteilhaft, jedoch nicht zwingend notwendig, die Segmente 19a, 19b, 29a, 29b der Strahler 19 und 29 so auszurichten, dass sich Bereiche 19b, 29b mit vergleichsweise geringer und Bereiche 19a, 29a mit vergleichsweise hoher Heizleistung jeweils gegenüberliegen.

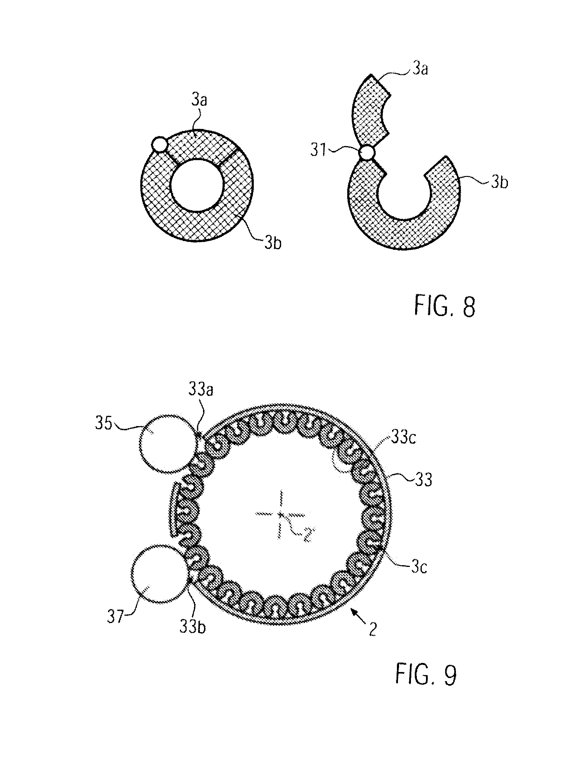

Wie vorstehend beschrieben, kann die Haltevorrichtung 7 so ausgebildet sein, dass eine Beladung der Heizkammern 3 bzw. Entnahme der Vorformlinge 5 in axialer Richtung bezüglich der Hauptachse 5' der Vorformlinge 5 durch deren Absenken bzw. Anheben erfolgt. Für eine Übergabe der Vorformlinge 5 kann es jedoch vorteilhaft sein, wenn diese lediglich seitlich, also ohne zusätzliche Hubbewegung in axialer Richtung in die Heizkammern 3 eingeführt bzw. aus diesen entnommen werden können. Zu diesem Zweck kann die Heizkammer 3, wie in Fig. 8 dargestellt, mehrteilig, insbesondere zweiteilig, ausgeführt werden, wobei die Heizkammer 3 durch Aufklappen eines Abschnitts 3a der Heizkammer 3 geöffnet werden kann, beispielsweise an einem Scharnier 31, das die Kammersegmente 3a, 3b verbindet. An dem Ofen 1 kann ein Betätigungsmechanismus, beispielsweise in Form einer mechanischen oder magnetischen Steuerkurve vorgesehen sein, um den Abschnitt 3a beim Erreichen eines Beschickungs- und Entnahmebereichs des Ofens 1 automatisch zu öffnen.

Die Drehachse des Öffnungsmechanismus der Heizkammer 3 könnte auch tangential zur Drehrichtung der Heizkammer 3 im Ofen 1 angeordnet sein.

Bevorzugt ist bei der Öffnungsbewegung der Heizkammer 3 ein Teil dieser unbeweglich mit dem Heizrad 2 verbunden.

Bevorzugt ist eine vertikale Trennebene der Kammersegmente 3a, 3b gegenüber einer nach außen weisenden, radialen Ausrichtung um eine vertikale Achse gedreht, d. h. die Trennebene weist, von oben betrachtet, schräg in Drehrichtung des Heizrads 2 oder entgegen die Drehrichtung. Dadurch wird die Übergabe der Vorformlinge 5 durch Transportarme erleichtert.

Alternativ kann die Heizkammer 3 auch durch ein (nicht dargestelltes) Auseinanderfahren zweier Hälften 3a, 3b oder mehrerer Teile der Heizkammer 3 geöffnet werden.

Fig. 9 zeigt eine alternative Ausführungsform des Ofens 1, bei der ebenfalls eine seitliche Beschickung der Heizkammern 3 möglich ist, und bei der in der Seitenwand der Heizkammern 3 eine bezüglich einer Rotationsachse 2' des Heizrads 2 radial nach außen gerichtete Ausnehmung 3c ausgebildet. Das Heizrad 2 wird ferner von einer umlaufenden, feststehenden Buchse 33 eingefasst, die die Ausnehmungen 3c der Heizkammern 3 nach außen hin im Wesentlichen abschließt. Allerdings sind In der Buchse 33 in umfänglichen Teilbereichen Ausnehmungen 33a und 33b zur Beschickung bzw. zur Entnahme der Vorformlinge 5 vorgesehen. Die Ausnehmungen 33a und 33b befinden sich vorzugsweise in einem jeweils an einen Einlaufstern 35 bzw. einen Auslaufstern 37 angrenzenden Bereich zur Übergabe der Vorformlinge 5. Die Heizkammern 3 sind somit beim Durchlaufen der Segmente 33a und 33b seitlich bzw. radial zugänglich, so dass ein Öffnen bzw. Schließen der Heizkammern 3 ohne den Einsatz zusätzlicher beweglicher Verschlussklappen 3b möglich ist.

Die Innenwand 33c der Buchse 33 kann beispielsweise als Reflektor oder passiver Infrarotstrahler ausgebildet sein, aber auch eine Ausführung als aktiver Hell- oder Dunkelstrahler ist denkbar. Es wäre auch möglich, das Abstrahlverhalten der Buchse 33 in axialer Richtung der Vorformlinge 5 (in einer zur Zeichenebene der Fig. 9 senkrechten Richtung) unterschiedlich auszubilden, um ein axiales Temperaturprofil in den Vorformlingen 5 auszubilden. Hierbei wäre es vorteilhaft, den Vorformling 5 mit der Haltevorrichtung 7 bezüglich der Heizkammer 3 rotieren zu lassen.

Alternativ könnte eine (nicht dargestellte) Variante eine zentrale feststehende Buchse umfassen, die nach innen weisende Ausnehmungen der Heizkammer in vergleichbarer Weise wie die außen liegenden Buchse 33 insbesondere zwischen einem Beschickungsbereich und einem Entnahmebereich des Ofens 1 verschließt. Die innen liegende Buchse könnte entsprechende thermische und optische Eigenschaften aufweisen wie die außen liegende Buchse 33. Es wäre auch denkbar, außen liegende und innen liegende Buchsen zu kombinieren, um eine kanalartige Einfassung für seitlich beidseitig offene Heizkammern 3 bereit zu stellen. Derartige Einfassungen könnten sich nur über einen umfänglichen Teilbereich des Ofens 1 erstrecken und beispielsweise als Segmente mit unterschiedlichen Heizeigenschaften hintereinander angeordnet sein. Auch die außen liegende Buchse 33 oder die innen liegende Buchse könnten entsprechend segmentiert sein.

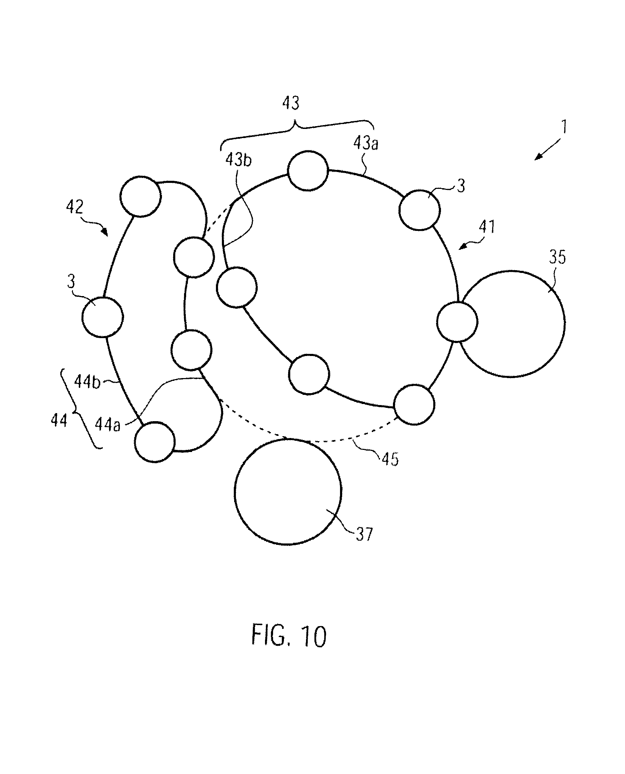

Figur 10 zeigt eine weitere Ausführungsform des erfindungsgemäßen Ofens 1, bei dem zwei getrennte Heizstufen 41, 42 vorgesehen sind, die Vorformlinge 5 nacheinander durchlaufen. Dabei laufen die Heizkammern 3 der Heizstufen 41 und 42 in getrennten Kreisläufen um. Die Transportbahnen 43, 44 der Heizstufen 41, 42 weisen jeweils mindestens einen Bereich 43a bzw. 44a auf, der ein Kreissegment eines gemeinsamen Kreises 45 ausbildet. Entsprechend verlaufen die Transportbahnen 43, 44 jeweils mindestens in einem weiteren Bereich 43b, 44b nicht entlang des Kreises 45. Die (der Übersichtlichkeit halber nicht gezeigte) Transportbahn der Haltevorrichtungen 7 verläuft in der Draufsicht im Wesentlichen entlang des Kreises 45 bzw. parallel dazu, so dass die Haltevorrichtungen 7 die Vorformlinge 5 von der Heizstufe 41 auf die Heizstufe 42 übergeben können, ohne ihre im Wesentlichen kreisförmige Transportbahn zu verlassen. Die Haltevorrichtungen 7 können daher auf dem Heizrad 2 in Form eines Rundläufers angeordnet werden. Zur Realisierung der Transportbahnen 43 und 44 der Heizkammern 3 der ersten und der zweiten Heizstufe 41 und 42 können beispielsweise (nicht dargestellte) Transportvorrichtungen 46, 47, wie beispielsweise Transfersternräder, mit über Steuerkurven schwenkbaren und/oder verschiebbaren Haltearmen für die Heizkammern 3 verwendet werden. Die Übergabe der Vorformlinge 5 an die Haltevorrichtungen 7 bzw. das Ausschleusen kann in bekannter Weise durch einen herkömmlichen Einlaufstern 35 bzw. einen Auslaufstern 37 erfolgen.

Diese Ausführungsform lässt sich besonders vorteilhaft mit den beschriebenen Varianten der Haltevorrichtung 7 kombinieren, da die Haltevorrichtungen 7 auch bei dieser zweistufigen Ausführung entlang einer kreisförmigen Transportbahn umlaufen können. Die zweistufige Anordnung ist besonders vorteilhaft zur Optimierung der axialen bzw. umfänglichen Profilierung der Vorformlinge. Hierunter ist jeweils eine bestimmte, an den nachfolgenden Blasvorgang angepasste Temperaturverteilung in der Wand des Vorformlings 5 zu verstehen.

Es könnten auch zwei Heizstufen in einer Heizkammer 3 durch geeignete Kombination von Strahlern und Rotationsbewegung bzw. Ausrichtung der relativen Drehlage zwischen Vorformling 5 und Heizkammer 3 realisiert werden, beispielsweise eine gleichmäßige, rotationssymmetrische Vorwärmung gefolgt von einer axialen und/oder umfänglichen Profilierung des Vorformlings 5.

Die beschriebenen Ausführungsformen lassen sich beliebig kombinieren. Insbesondere können die beschriebenen Varianten der Haltevorrichtungen 7 beliebig mit den beschriebenen Varianten der Heizkammer 3 und des Heizstabs 19 sowie mit den im Zusammenhang mit den Figuren 8 bis 10 beschriebenen Ausführungsformen des Ofens 1 kombiniert werden. Eine Veränderung der Drehlage zwischen Vorformling und Heizkammer bzw. Heizstab kann je nach Anforderung vorteilhaft sein, ist jedoch nicht zwingend notwendig.

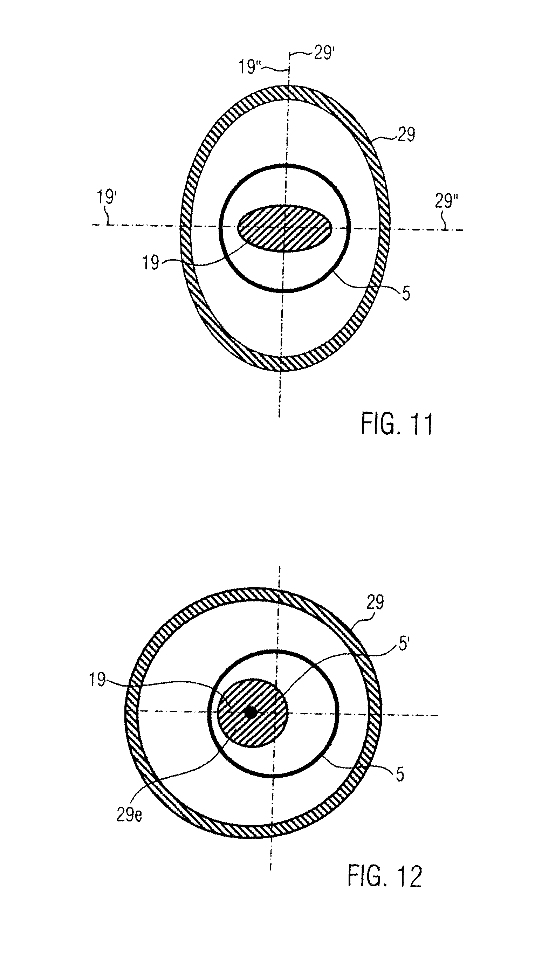

Die Fig. 11 zeigt eine weitere für das "Preferential Heating" vorteilhafte Ausführungsform der Erfindung, mit der ähnliche Vorteile erzielt werden können wie mit den in den Fig. 6 und 7 dargestellten Ausführungsformen. Wie die Fig. 11 andeutet, kann eine umfänglich unterschiedlich starke Erwärmung durch im Querschnitt rotationsasymmetrische Heizstrahler 29 und/oder Heizstäbe 19 erzielt werden. Geeignete Querschnittsformen sind für beide Heizelemente Ovale, insbesondere Ellipsen mit einem geeigneten Längenverhältnis der Hauptachsen 29', 19' und Nebenachse 29", 19" der Strahler 29, 19. Ebenso denkbar sind rechteckige Querschnitte (nicht gezeigt) mit unterschiedlich langen Seiten oder entsprechend geformte, andere Polygone. Bei derartigen asymmetrischen Formen der Heizstrahler 29 und/oder Heizstäbe 19 wird der Vorformling 5 während der Bestrahlung vorzugsweise nicht gedreht oder nur über einen Teil der Bestrahlungsdauer. Die Hauptachse 29' und die Nebenachse 19" sowie die Hauptachse 19' und die Nebenachse 29" müssen sich allerdings nicht wie im gezeigten Beispiel decken. Ebenso könnte die Drehlage der Heizstrahler 19, 29 zueinander variiert werden.

Ähnliche, umfänglich ungleichmäßige Temperaturprofile im erwärmten Vorformling 5 lassen sich auch durch eine asymmetrische Positionierung der Hauptachse 5' des Vorformlings 5 bezüglich des Heizstrahlers 29 und/oder des Heizstabs 19 erzielen, wie in Fig. 12 angedeutet. Es wäre hierbei auch möglich, den Vorformling 5 nur bezüglich des Querschnitts des äußeren Heizstrahlers 29 und der zugehörigen Heizkammer 3 oder nur bezüglich des Querschnitts des Heizstabs 19 asymmetrisch anzuordnen. Auch bei einer derartigen asymmetrischen Positionierung wird der Vorformling 5 während der Bestrahlung vorzugsweise nicht gedreht oder nur über einen Teil der Bestrahlungsdauer.

Es wäre selbstverständlich auch möglich, die Bestrahlungsanordnungen der Fig. 11 und 12 zu kombinieren. Das heißt, man könnte rotationsasymmetrische Strahlerformen mit einer bezüglich des jeweiligen Strahlerquerschnitts asymmetrischen Positionierung des Vorformlings 5 kombinieren. Insbesondere bei asymmetrischen Strahlerquerschnitten könnte man die Asymmetrie der Positionierung bezüglich eines Querschnittsschwerpunkts 29e des äußeren Strahlers 29 und/oder (nicht gezeigt) des Heizstabs 19 definieren.

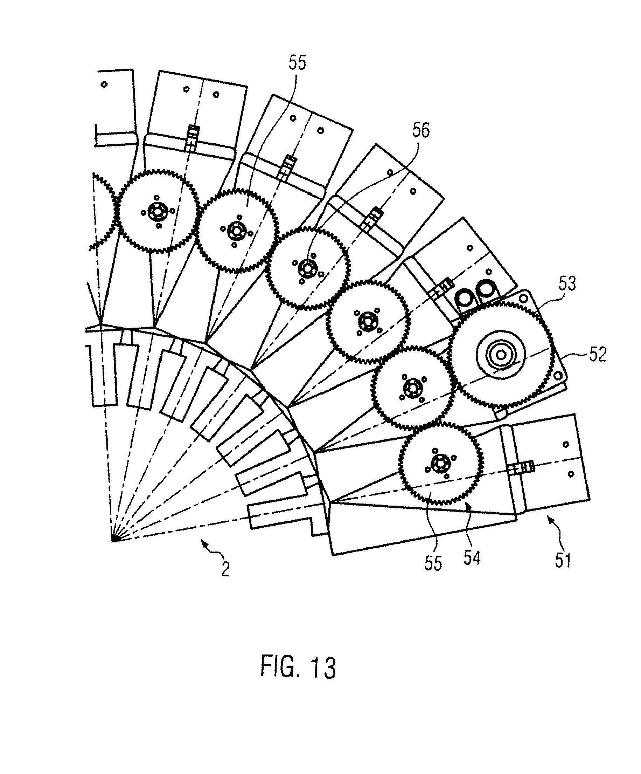

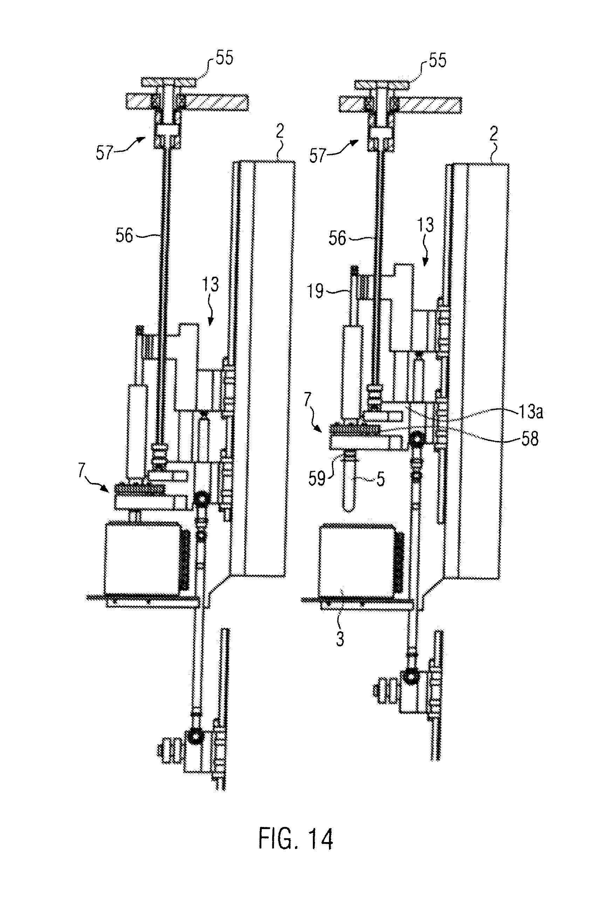

Die Fig. 13 und 14 zeigen eine weitere bevorzugte Ausführungsform der Erfindung, bei der an dem Heizrad 2 eine zentrale Antriebseinheit 51 für den gemeinsamen Rotationsantrieb der Haltevorrichtungen 7 vorgesehen ist. Die Antriebseinheit 51 umfasst einen mitlaufenden Motor 52 mit einem Zahnrad 53 oder dergleichen, das in eine Zahnradkette 54 eingreift und diese antreibt. Diese wird aus Zahnrädern 55 gebildet, die jeweils einer Haltevorrichtung 7 zugeordnet sind und ineinander kämmen, so dass diese sich kettenartig, im Beispiel mit jeweils abwechselnder Laufrichtung, gegenseitig antreiben. Es genügt somit ein einziges Antriebsaggregat, nämlich der Motor 52, um alle an dem Heizrad 2 vorgesehenen Haltevorrichtungen 7 anzutreiben und die Vorformlinge 5 bezüglich der zugeordneten Heizkammern 3 zu drehen.

Die Fig. 14 verdeutlicht zudem, dass zwischen den Zahnrädern 55 und den Haltevorrichtungen 7 jeweils eine Keilwelle 56 oder dergleichen vorgesehen ist, die ein Drehmoment von dem jeweils zugeordneten Zahnrad 55 auf die darunter an einer Hubvorrichtung 13 gelagerte Haltevorrichtung 7 überträgt. Der Wechsel der Haltevorrichtung 7 und des Vorformlings 5 von einer in der Fig. 13 links gezeigten Bestrahlungsstellung in eine rechts gezeigte Übergabestellung erfolgt durch Anheben eines Schlittens 13a der Hubvorrichtung 13.

Wie die Fig. 14 ferner zeigt, ist die Keilwelle 56 axial an dem Schlitten 13a gelagert und somit an die Haltevorrichtung 7 in vertikaler Richtung gekoppelt. Die Keilwelle 56 ist ferner verschiebbar in einem drehmomentschlüssigen Schiebesitz, wie beispielsweise einer Nabe 57 des Zahnrads 55 gelagert. Dadurch kann die Keilwelle 56 unabhängig vom Hub der Hubvorrichtung 13 ein Drehmoment von dem Zahnrad 55 an die Haltevorrichtung 7 übertragen. An dieser ist im gezeigten Beispiel noch ein Getriebezahnrad 58 vorgesehen ist, so dass in der Haltevorrichtung 7 eine vorzugsweise federnd vorgespannte Hohlwelle 59 zum Einsatz kommen, beispielsweise eine in den Mündungsabschnitt 5c eingreifende Spannzange, durch die der Heizstab 19 in den Vorformling 5 eingeführt werden kann. Somit können die für den Wechsel zwischen der Übergabestellung und der Bestrahlungsstellung nötigen Positionswechsel und ein für die Übergabe des Vorformlings 5 nötiger seitlicher Zugang (in der Figur 14 von links) zur Haltevorrichtung 7 gewährleistet werden, ohne den Rotationsantrieb der Haltevorrichtung 7 von der zentralen Antriebseinheit 51 abkoppeln zu müssen.

Dadurch können nicht nur Kosten für zusätzliche Aktoren und Steuereinheiten eingespart werden. Es ist auch möglich, empfindliche aktive Anlagenkomponenten entfernt von den erhitzten Bereichen der Heizkammern 3 und der Heizstäbe 19 anzuordnen und dadurch die Zuverlässigkeit des erfindungsgemäßen Ofens zu erhöhen.

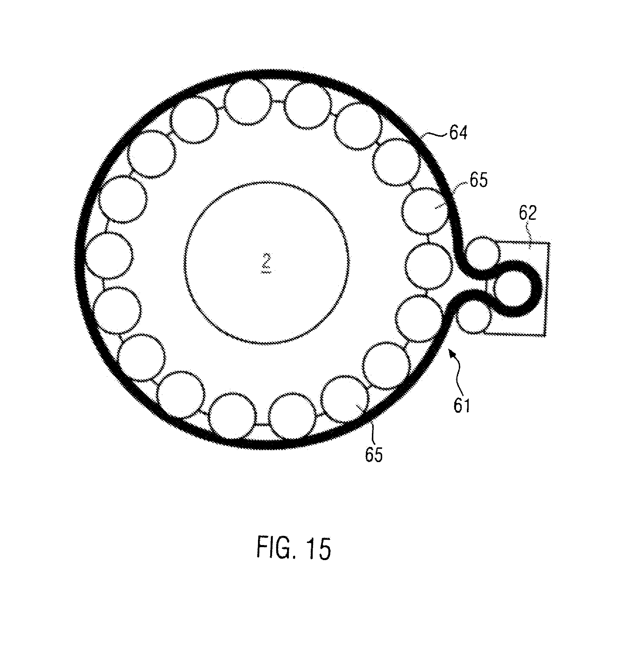

Fig. 15 zeigt eine weitere Variante einer zentralen Antriebseinheit 61, bei der ebenso ein Motor 62 und den Haltevorrichtungen 7 zugeordnete Zahnräder 65, Reibräder oder dergleichen vorgesehen sind. Ebenso könnte der Hubmechanismus 13 einschließlich der Keilwelle 56 und der Nabe 57 auch bei dieser Ausführungsform verwendet werden (nicht gezeigt). Die Zahnräder 65 kämmen jedoch nicht ineinander sondern sind mit einem gemeinsamen, außen umlaufenden Antriebsriemen 64 verbunden, der wiederum von dem Motor 62 angetrieben wird. Der Motor 62 könnte hierzu ebenso mit dem Heizrad 2 umlaufen oder aber auch fest stehend sein. Der Antriebsriemen 64 hat den Vorteil, dass an die Zahnräder 65 eine geringere Anforderung bezüglich der Maßhaltigkeit gestellt wird und somit Kosten bei der Fertigung und bei der Instandhaltung aufgrund von Verschleiß eingespart werden können.

Auch die in den Fig. 11 bis 15 beschriebenen Ausführungsformen lassen sich beliebig in technisch vorteilhafter Weise miteinander oder mit anderen Varianten des erfindungsgemäßen Ofens kombinieren.

## Patentansprüche

1. Ofen zum Konditionieren von Vorformlingen (5), insbesondere für das Streckblasen von Kunststoffgefäßen, mit mehreren im Kreis umlaufenden Heizkammern (3) zum Erwärmen je eines Vorformlings (5) mit Infrarotstrahlung,
**gekennzeichnet durch**
Haltevorrichtungen (7) zum Halten der Vorformlinge (5) während der Erwärmung derart, dass ein zu konditionierender Abschnitt (5b) des Vorformlings (5) im Wesentlichen in der Heizkammer (3) und ein nicht zu konditionierender Abschnitt (5c) außerhalb der Heizkammer (3) angeordnet ist.

2. Ofen nach Anspruch 1, **dadurch gekennzeichnet, dass** die Heizkammern (3) einen ovalen, insbesondere elliptischen Querschnitt oder einen polygonalen, insbesondere rechteckigen Querschnitt aufweisen, und/oder dass die Haltevorrichtungen (7) ausgebildet sind, um den zu konditionierenden Abschnitt (5b) des Vorformlings (5) jeweils exzentrisch bezüglich des Querschnitts der Heizkammer zu halten.

3. Ofen nach Anspruch 1 oder 2, **dadurch gekennzeichnet, dass** die Heizkammer (3) und/oder die Haltervorrichtung (7) im Wesentlichen um die Hauptachse (5') des Vorformlings (5) drehbar gelagert ist, um die Drehlage des Vorformlings (5) bezüglich der Heizkammer (3) beim Erwärmen einzustellen, insbesondere kontinuierlich zu ändern.

4. Ofen nach Anspruch 3, ferner **gekennzeichnet durch** eine zentrale Antriebsvorrichtung (11, 51, 52, 61, 62) zum Drehen der Haltevorrichtungen (7), wobei die zentrale Antriebsvorrichtung insbesondere mit den Haltevorrichtungen drehmomentschlüssig verbundene und ineinander kämmende Zahnräder umfasst.

5. Ofen nach Anspruch 4, ferner **gekennzeichnet durch** Keil- oder Zahnwellen (53) zur Drehmomentübertragung von der zentralen Antriebsvorrichtung (51, 52, 61, 62) auf die Haltevorrichtungen (7) und **durch** Hubvorrichtungen (13) zum Heben/Senken der Haltevorrichtungen entlang der Keil- oder Zahnwellen.

6. Ofen nach wenigstens einem der Ansprüche 3 bis 5, **dadurch gekennzeichnet, dass** die Haltevorrichtung (7) eine Auflageplatte (15) für einen an dem Vorformling (5) ausgebildeten Tragring (5a) umfasst, und dass an der Haltevorrichtung (7) ein Antriebsmechanismus (9), insbesondere eine umfängliche Verzahnung und/oder ein dezentraler elektrischer Antrieb, zum Drehen des Vorformlings (5) ausgebildet ist.

7. Ofen nach Anspruch 6, **dadurch gekennzeichnet, dass** die Haltevorrichtung (7) eine Aufnahmehülse (21) umfasst, die die Heizkammer (3) zumindest teilweise umfänglich umschließt und mit der Auflageplatte (15) durch eine lösbare Kupplung verbunden ist, wobei der Antriebsmechanismus (9) an der Aufnahmehülse (21) vorgesehen ist.

8. Ofen nach Anspruch 6, **dadurch gekennzeichnet, dass** die Haltevorrichtung (7) ferner eine Anpressvorrichtung (17) umfasst, die mit einem an dem Vorformling (5) vorgesehenen Mündungsabschnitt (5c) in Eingriff gebracht werden kann, um den Vorformling (5) mit dem Tragring (5a) gegen die Auflageplatte (15) zu pressen, wobei der Antriebsmechanismus (9) an der Anpressvorrichtung (17) vorgesehen ist .

9. Ofen nach wenigstens einem der Ansprüche 3 bis 5, **dadurch gekennzeichnet, dass** die Haltevorrichtung (7) einen Haltedorn (27) zum Eingreifen in einen an dem Vorformling (5) vorgesehenen Mündungsbereich (5c) umfasst, und dass an der Heizkammer (3) ein Antriebsmechanismus (25), insbesondere eine umfängliche Verzahnung und/oder ein dezentraler elektrischer Antrieb, zur Drehung der Heizkammer (3) ausgebildet ist.

10. Ofen nach mindestens einem der vorigen Ansprüche, **dadurch gekennzeichnet, dass** die Heizkammer (3) mindestens einen im Wesentlichen ringförmigen oder ringsegmentförmigen äußeren Infrarot-Heizstrahler (29) zum Bestrahlen der Außenwand (5e) des Vorformlings (5) umfasst.

11. Ofen nach mindestens einem der vorigen Ansprüche, ferner **gekennzeichnet durch** einen axial verstellbaren und im Wesentlichen stabförmigen inneren Infrarot-Heizstrahler (19) zum Bestrahlen der Innenwand (5d) des Vorformlings (5).

12. Ofen nach Anspruch 11, **dadurch gekennzeichnet, dass** der innere Infrarot-Heizstrahler (19) einen ovalen, insbesondere elliptischen Querschnitt oder einen polygonalen, insbesondere rechteckigen Querschnitt aufweist, und/oder ferner weitere Haltevorrichtungen vorgesehen sind, um die inneren Infrarot-Heizstrahler jeweils exzentrisch bezüglich der Hauptachse (5') des Vorformlings (5) zu halten.

13. Ofen nach Anspruch 10 und/oder 11, **dadurch gekennzeichnet, dass** an dem inneren und/oder äußeren Heizstrahler (19, 29) umfängliche Teilbereiche (19a, 19b, 29a, 29b) mit unterschiedlicher Infrarotabstrahlung, insbesondere mit unterschiedlicher Strahlungsleistung und/oder mit unterschiedlichem spektralen Abstrahlverhalten, ausgebildet sind, um umfängliche Teilbereiche des Vorformlings (5) unterschiedlich stark zu erwärmen.

14. Ofen nach mindestens einem der vorigen Ansprüche, **dadurch gekennzeichnet, dass** die Heizkammer (3) mindestens zwei, insbesondere durch einen Klappmechanismus (31) oder einen Schiebemechanismus verbundene, Kammersegmente (3a, 3b) umfasst, sowie **gekennzeichnet durch** eine Betätigungsvorrichtung zum Öffnen und Schließen der Heizkammer (3) **durch** Auseinander- bzw. Aufeinanderzubewegen der Kammersegmente (3a, 3b) beim Entladen bzw. Beschicken der Heizkammern (3).

15. Ofen nach mindestens einem der vorigen Ansprüche, **dadurch gekennzeichnet, dass**
- die Heizkammern (3) umfänglich gleichmäßig an einem um eine Rotationsachse (2') drehbar gelagerten Heizrad (2) angeordnet sind;
- in der Seitenwand der Heizkammern jeweils eine bezüglich der Rotationsachse (2') radial nach außen gerichtete Ausnehmung (3c) ausgebildet ist; und
- an dem Ofen ferner eine umfänglich umschließende Buchse (33) vorgesehen ist, die die Ausnehmung in einem umfänglichen Teilbereich des Heizrads verschließt, insbesondere zwischen einem Beschickungsbereich und einem Entnahmebereich, in denen jeweils eine Ausnehmung (33a, 33b) in der Buchse (33) vorgesehen ist, so dass die Heizkammern (3) durch die Ausnehmungen (3c, 33a, 33b) der Heizkammern (3) und der Buchse (33) zur Beschickung mit einem Vorformling (5) bzw. zu dessen Entnahme zugänglich sind

16. Ofen nach mindestens einem der vorigen Ansprüche, **dadurch gekennzeichnet, dass**
- die Heizkammern (3) umfänglich gleichmäßig an einem um eine Rotationsachse (2') drehbar gelagerten Heizrad (2) angeordnet sind;
- in der Seitenwand der Heizkammern jeweils eine bezüglich der Rotationsachse (2') radial nach innen gerichtete Ausnehmung ausgebildet ist; und
- an dem Ofen ferner eine zentrale Buchse vorgesehen ist, die die Ausnehmung in einem umfänglichen Teilbereich des Heizrads verschließt, insbesondere zwischen einem Beschickungsbereich und einem Entnahmebereich, in denen jeweils eine Ausnehmung in der Buchse vorgesehen ist, so dass die Heizkammern (3) durch die Ausnehmungen der Heizkammern und der Buchse zur Beschickung mit einem Vorformling (5) bzw. zu dessen Entnahme zugänglich sind.

17. Ofen nach mindestens einem der vorigen Ansprüche, **dadurch gekennzeichnet, dass** eine erste Heizstufe (41) in Form einer ersten Gruppe Heizkammern (3) vorgesehen ist, die in einem ersten Kreis umlaufen, und eine zweite Heizstufe (42) in Form einer zweiten Gruppe Heizkammern (3), die in einem zweiten Kreis umlaufen, und dass die Haltevorrichtungen (7) eingerichtet sind, um die Vorformlinge (5) beim Erwärmen in beiden Heizstufen (41, 42) zu halten.

18. Ofen nach Anspruch 16, **dadurch gekennzeichnet, dass** die Heizkammern (3) und/oder die Haltervorrichtungen (7) eingerichtet sind, um die Drehlage des Vorformlings (5) bezüglich der Heizkammer (3) beim Erwärmen in der ersten Heizstufe (41) kontinuierlich zu ändern und beim Erwärmen in der zweiten Heizstufe (42) gerichtet einzustellen, oder umgekehrt, so dass der Vorformling (5) in der ersten Stufe (41) bezüglich seiner Hauptachse (5') im Wesentlichen umfänglich gleichmäßig und in der zweiten Stufe (42) in einer ersten zur Hauptachse (5') senkrechten Richtung stärker als in einer zweiten senkrechten Richtung erwärmt wird, bzw. umgekehrt.

19. Ofen nach Anspruch 17, **dadurch gekennzeichnet, dass** die Infrarotstrahlung in den Heizkammern (3) der ersten Heizstufe (41) im Wesentlichen derart verteilt ist, dass sich axiale Teilbereiche der Vorformlinge (5) unterschiedlich stark erwärmen, und in den Heizkammern (3) der zweiten Heizstufe (42)im Wesentlichen derart, dass sich umfängliche Teilbereiche der Vorformlinge (5) unterschiedlich stark erwärmen.

20. Ofen nach einem der Ansprüche 16 bis 18, ferner **gekennzeichnet durch** eine erste und eine zweite Transportvorrichtung (46, 47) zum umlaufenden Transport der Heizkammern (3) der ersten bzw. der zweiten Gruppe (41, 42), wobei die Transportbahnen (43, 44) der Transportvorrichtungen (46, 47) jeweils einen Abschnitt (43a, 44a) aufweisen, der ein Segment einer gemeinsamen Kreisbahn (45) ausbildet, und dass die Haltevorrichtung (7) auf dem Heizrad (2) so angeordnet sind, dass sie in einem umfänglichen Teilabschnitt des Heizrads (2) im Wesentlichen entlang der gemeinsamen Kreisbahn (45) umlaufen.
